(19) Europäisches Patentamt
European Patent Office
Office européen des brevets

(11) **EP 3 009 984 A1**

(12) **EUROPÄISCHE PATENTANMELDUNG**

(43) Veröffentlichungstag:
**20.04.2016 Patentblatt 2016/16**

(51) Int Cl.:
***G06T 7/00*** *(2006.01)*     ***G06T 7/20*** *(2006.01)*

(21) Anmeldenummer: **14188805.7**

(22) Anmeldetag: **14.10.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **SICK AG**
**79183 Waldkirch/Breisgau (DE)**

(72) Erfinder:
• **Schüler, Pascal**
**79331 Teningen (DE)**
• **Burghardt, Sascha**
**79183 Waldkirch (DE)**

(74) Vertreter: **Manitz, Finsterwald & Partner GbR**
**Martin-Greif-Strasse 1**
**80336 München (DE)**

(54) **Detektionssystem für optische Codes**

(57) Ein Detektionssystem für optische Codes, die an einem Objekt, das durch ein Lesefeld eines Sensors des Detektionssystems gefördert wird, angebracht sind, wobei das Detektionssystem dazu ausgebildet ist, mittels des Sensors eine Sequenz von Bildern von einem jeweiligen Teil des Objekts, der sich zur jeweiligen Aufnahmezeit eines jeweiligen Bildes im Lesefeld befindet, aufzunehmen, ist dadurch gekennzeichnet, dass das Detektionssystem ferner dazu ausgebildet ist, einen jeweiligen Verschiebungsvektor zwischen jeweils zwei aufeinanderfolgenden Bildern der Bildsequenz anhand der jeweiligen zwei aufeinanderfolgenden Bilder zu bestimmen, wobei der jeweilige Verschiebungsvektor angibt, wie weit ein in einem Bild enthaltener Bildbereich, der auch im Vorgängerbild enthalten ist, relativ zum Vorgängerbild verschoben ist.

EP 3 009 984 A1

**Beschreibung**

Die vorliegende Erfindung betrifft ein Detektionssystem für optische Codes, die an einem Objekt, das durch ein Lesefeld eines Sensors des Detektionssystems gefördert wird, angebracht sind, wobei das Detektionssystem dazu ausgebildet ist, mittels des Sensors eine Sequenz von Bildern von einem jeweiligen Teil des Objekts, der sich zur jeweiligen Aufnahmezeit eines jeweiligen Bildes im Lesefeld befindet, aufzunehmen.

Mit einem derartigen aus dem Stand der Technik bekannten Detektionssystem kann ein Code auf dem Objekt verfolgt, also "getrackt", werden. Nachteilig ist, dass bei einem aus dem Stand der Technik bekannten Detektionssystem zum Verfolgen des Codes wenigstens ein weiterer Sensor, der die Fördergeschwindigkeit des Objekts durch das Lesefeld ermittelt, benötigt wird und außerdem vorgegeben werden muss, wie der Sensor zur Förderrichtung des Objekts ausgerichtet ist.

Die DE 100 51 415 C2 beschreibt ein optisches Trackingsystem, mittels dem unter Verwendung mindestens zweier Bildaufnehmer eine Positions- und/oder Orientierungsbestimmung eines mit einem Marker ausgestatteten Objekts durchgeführt werden kann.

Der vorliegenden Erfindung liegt die Aufgabe zugrunde, ein verbessertes Detektionssystem bereitzustellen, bei dem auf einfache und effiziente Weise in den Bildern detektierte Codes über die Sequenz von Bildern verfolgt, also getrackt, werden können.

Die Aufgabe wird durch ein Detektionssystem mit den Merkmalen des Anspruchs 1 und insbesondere dadurch gelöst, dass ein Detektionssystem der eingangs genannten Art dazu ausgebildet ist, einen jeweiligen Verschiebungsvektor zwischen jeweils zwei aufeinanderfolgenden Bildern der Bildsequenz anhand der jeweiligen zwei aufeinanderfolgenden Bilder zu bestimmen, wobei der jeweilige Verschiebungsvektor angibt, wie weit ein in einem Bild enthaltener Bildbereich, der auch im Vorgängerbild enthalten ist, relativ zum Vorgängerbild verschoben ist.

Anhand der zwischen den aufeinanderfolgenden Bildern bestimmten Verschiebungsvektoren ist es möglich, die jeweilige Position eines einmal erfassten Codes über die Sequenz von Bildern rechnerisch zu bestimmen und auf diese Weise die Position des Codes zumindest rechnerisch über die Sequenz von Bildern zu verfolgen und somit den Code - insbesondere ohne Verwendung eines weiteren Sensors - über die aufgenommene Bildsequenz zu tracken.

Ein Code wird zum Beispiel in einem ersten Bild der Bildsequenz erstmalig erfasst und gegebenenfalls dekodiert. Dabei kann seine Position in dem ersten Bild ermittelt werden. Da erfindungsgemäß der Verschiebungsvektor zwischen einem dem ersten Bild nachfolgenden zweiten Bild und dem ersten Bild bestimmt wird, kann anhand der bekannten Position des Codes im ersten Bild und dem Verschiebungsvektor die fiktive Position des Codes im zweiten Bild berechnet werden. Dabei wird die Position des Codes im zweiten Bild als fiktive oder virtuelle Position bezeichnet, da die Position des Codes im zweiten Bild nicht aus dem zweiten Bild ermittelt, sondern nur berechnet wird. Selbstverständlich kann es vorgesehen sein, dass die tatsächliche Position des Codes im zweiten Bild auch mittels des Sensors detektiert wird, insbesondere zur Verifikation der berechneten fiktiven Position. Anhand des Verschiebungsvektors, der zwischen einem dem zweiten Bild nachfolgenden dritten Bild und dem zweiten Bild bestimmt wird, kann dann wiederum die fiktive Position des Codes bezüglich des dritten Bildes berechnet werden. Dies kann bis zum letzten Bild fortgesetzt werden, so dass der Code unter Verwendung der Verschiebungsvektoren über die nachfolgenden Bilder der Bildsequenz bis zum letzten Bild weiterverfolgt werden kann.

Insofern ist nach einer Weiterbildung der Erfindung das Detektionssystem dazu ausgebildet, anhand der Position des in dem Bild erfassten Codes und anhand des zwischen dem Bild und seinem Nachfolgebild bestimmten Verschiebungsvektors eine fiktive Position des Codes bezüglich des Nachfolgebildes zu bestimmen. Die berechnete, virtuelle bzw. fiktive Position des Codes kann somit im Nachfolgebild vorhergesagt werden, ohne dass die tatsächliche Position des Codes im Nachfolgebild bestimmt wird.

Dabei kann es auch vorkommen, dass der Code nach seiner Erfassung in einem der Bilder nicht in allen nachfolgenden Bildern zu sehen ist, da der Code in Abhängigkeit von der Fördergeschwindigkeit irgendwann das Lesefeld verlässt. Virtuell, also fiktiv bzw. rein rechnerisch, kann der Code aber bis zum Zeitpunkt der Aufnahme des letzten Bildes weiterverfolgt werden, indem zum Beispiel zugelassen wird, dass die Koordinaten, die die fiktive Position des Codes bezüglich eines für jedes Bild definierten Koordinatensystems beschreiben, auch außerhalb des Bildrands liegen können.

Bevorzugt ist das Detektionssystem dazu ausgebildet, für wenigstens einen und bevorzugt für alle in der Bildsequenz detektierten Codes anhand der Verschiebungsvektoren eine jeweilige fiktive Position wenigstens bezüglich des letzten Bilds der Bildsequenz zu bestimmen. Die relative Lage bzw. Anordnung der Codes zueinander kann somit anhand ihrer fiktiven Positionen und bezogen auf das letzte Bild der Bildsequenz ermittelt werden. Dadurch kann zum Beispiel ein virtuelles, zusammengesetztes ("gestichtes") Bild des Objekts erstellt werden, in welchem die erfassten Codes ihrer relativen Lage entsprechend wiedergegeben sind.

Nach einer Weiterbildung der Erfindung ist das Detektionssystem dazu ausgebildet, die detektierten Codes in Abhängigkeit von ihrer jeweiligen fiktiven Position bezüglich des letzten Bildes der Bildsequenz zu sortieren. Die Codes können somit entsprechend ihrer fiktiven Position sortiert und somit zum Beispiel in einer Liste, die nachfolgend auch als Trackingliste bezeichnet wird, entsprechend ihrer jeweiligen fiktiven Position gelistet und ausgegeben werden.

Vorzugsweise ist das Detektionssystem dazu ausgebildet, für einen in einem Bild enthaltenen Code wenigstens die Position des Codes in dem Bild zu detektieren. Die Position des Codes kann dabei in Form von X- und Y-Koordinaten in einem bzgl. des Bildes definierten Koordinatensystem bestimmt werden.

Die Position des Codes kann außerdem, insbesondere zusammen mit dem Code, in einer Liste der erfassten Codes, die auch als Trackingliste bezeichnet wird, gespeichert werden.

Vorzugsweise ist das Detektionssystem dazu ausgebildet, einen in einem Bild detektierten Code zu dekodieren. Der Codeinhalt und gegebenenfalls weitere Codemerkale, wie etwa der Codetyp und die Länge des Codes, können somit von dem Detektionssystem bestimmt werden.

Das Detektionssystem kann außerdem dazu ausgebildet sein, die durch Dekodieren gewonnenen Daten eines in einem Bild erfassten Codes, insbesondere zusammen mit der Position des Codes, vorzugsweise in der bereits erwähnten Trackingliste zu speichern.

Das Detektionssystem kann dazu ausgebildet sein, die, insbesondere in der Trackingliste gespeicherte, Position des Codes durch die fiktive Position zu aktualisieren. Die Trackingliste kann somit bezogen auf das Nachfolgebild und die jeweilige Position der in der Trackingliste erfassten Codes aktualisiert werden.

Nach einer weiteren Ausgestaltung der Erfindung ist das Detektionssystem dazu ausgebildet, anhand der fiktiven Position und des zwischen dem Nachfolgebild und dem diesem nachfolgenden, zweiten Nachfolgebild bestimmten Verschiebungsvektors eine weitere fiktive Position des Codes bezüglich des zweiten Nachfolgebilds zu bestimmen, in entsprechender Weise für jedes weitere Nachfolgebild eine jeweilige weitere fiktive Position des Codes in dem jeweiligen Nachfolgebild zu bestimmen, bis für das letzte Bild der Sequenz von Bildern die fiktive Position des Codes bezüglich des letzten Bildes bestimmt ist.

Dabei kann die Trackingliste durch die für den Code jeweils neu bestimmte fiktive Position aktualisiert werden, so dass die Trackingliste am Ende für sämtliche erfassten Codes die jeweilige fiktive Position jedes Codes in Bezug auf das letzte Bild der aufgenommenen Sequenz von Bildern enthält. Aus der Trackingliste kann somit die fiktive Position sämtlicher erfasster Codes bezogen auf das letzte Bild der Bildsequenz entnommen werden. Sämtliche erfassten Codes können somit, insbesondere unter Verwendung der Trackingliste, über die Bildsequenz bis zum letzten Bild verfolgt, also getrackt werden. Dadurch kann ein gestichtes, virtuelles Bild erstellt werden, in dem sämtliche Codes entsprechend ihrer relativen Lage zueinander dargestellt sind und das nicht durch das Lesefeld des Sensors begrenzt ist.

Das Detektionssystem kann dazu ausgebildet sein, einen Code, der an einer im jeweiligen Nachfolgebild berechneten fiktiven Position detektiert wird, zu dekodieren oder, insbesondere falls der Code bereits erfolgreich dekodiert wurde, nicht mehr zu dekodieren.

Bei dem an der fiktiven Position im Nachfolgebild detektierten Code handelt es sich normalerweise um denselben Code wie der bereits detektierte Code. Somit kann eine erneute Dekodierung dieses Codes unterbleiben, wenn der Code in einem Vorgängerbild bereits mit Erfolg dekodiert wurde. Rechenzeit kann dadurch eingespart werden.

Der Sensor kann so arbeiten, dass er zuerst eine Segmentierung eines aufgenommenen Bildes vornimmt und anschließend einen in einer Region des Bildes bei der Segmentierung detektierten Code dekodiert. Da für ein Nachfolgebild die fiktive Position eines bereits erfassten und dekodierten Codes vorhergesagt werden kann, ist es somit möglich, bezüglich der Segmentierung die Region zu bestimmen, in der sich der Code im Nachfolgebild befinden wird. Auf die erneute Dekodierung des in dieser Region vorhandenen Codes kann somit verzichtet werden, um Rechenzeit zu sparen. Außerdem kann bereits die Region von der Segmentierung ausgenommen, insbesondere ausmaskiert, werden, wodurch weitere Rechenzeit eingespart wird.

Das Detektionssystem kann dazu ausgebildet sein, anhand wenigstens eines Verschiebungsvektors Paare von Codes zu identifizieren, wobei ein jeweiliges Code-Paar aus einem ersten Code und dem gleichen, in einem späteren Bild detektierten zweiten Code gebildet ist. In verschiedenen Bildern detektierte Codes können somit als die gleichen Codes erkannt und zu einem Code-Paar zusammengefasst werden.

Bevorzugt ist das Detektionssystem dazu ausgebildet, die Position eines zweiten Codes in einem späteren Bild mit der für das spätere Bild berechneten fiktiven Position eines ersten Codes zu vergleichen, und den ersten Code und den zweiten Code als ein Code-Paar zu identifizieren, wenn die Position und die fiktive Position zumindest im Wesentlichen übereinstimmen.

Der erste Code kann zusammen mit der fiktiven Position in der Trackingliste gespeichert sein. Indem der zweite Code und der erste Code als Code-Paar identifiziert werden, kann verhindert werden, dass der zweite Code separat zum ersten Code in der Trackingliste erfasst und somit als weiterer Code mittels der Trackingliste über die Sequenz von Bildern weiterverfolgt wird.

Das Detektionssystem kann dazu ausgebildet sein, mittels Dekodieren gewonnene Daten des ersten Codes durch mittels Dekodieren gewonnene Daten des zweiten Codes zu aktualisieren und/oder zu ergänzen und/oder zu verifizieren. Insbesondere können die mittels Dekodieren des ersten und zweiten Codes gewonnenen Daten in Abhängigkeit von einer jeweiligen erreichten Resultatklasse miteinander verrechnet werden. Dies wird beispielhaft weiter unten im Rahmen der Figurenbeschreibung noch näher erläutert werden.

Durch das "Verrechnen" gleicher, aber in unterschiedlichen Bildern dekodierter Codes können zum Beispiel Statistikdaten, insbesondere bezüglich einer Leseratenstatistik, durch Herausrechnen von z.B. nicht lesbaren Codes, verbessert werden.

Nach einer Weiterbildung der Erfindung ist das Detektionssystem dazu ausgebildet, anhand wenigstens eines Verschiebungsvektors eine Fördergeschwindigkeit zu bestimmen, mit der das Objekt durch das Lesefeld gefördert wird. Der Verschiebungsvektor gibt die Verschiebung eines in einem Bild enthaltenen Bildbereichs relativ zu seiner Lage im Vorgängerbild zum Beispiel in Form von Pixeln an. Sind die Relation von Pixeln in Millimeter, bezogen auf die Förderstrecke, und die Frame-Rate der Bildaufnahme bekannt, so kann die Fördergeschwindigkeit des Objekts, und zwar jeweils von Bild zu Bild, bestimmt werden. Dadurch können zum Beispiel Statistiken über den Geschwindigkeitsverlauf eines zum Fördern des Objekts verwendeten Förderbandes erstellt werden. Außerdem können die Fördergeschwindigkeiten bzgl. des Lesetors visualisiert werden. Ferner kann ein Bandstillstand detektiert und eine entsprechende Meldung ausgegeben werden, z.B. um ein Pollen von Leseresultaten während eines Bandstillstands zu vermeiden.

Besonders vorteilhaft ist es, wenn das Detektionssystem dazu ausgebildet ist, einen jeweiligen Verschiebungsvektor zwischen einem Bild und seinem Nachfolgebild unter Verwendung eines korrelativen Verfahrens, bei dem wenigstens ein aus dem Bild gewonnenes Profil und ein aus dem Nachfolgebild gewonnenes Profil miteinander korreliert werden, zu berechnen. Dadurch kann auf zuverlässige Weise und in verhältnismäßig kurzer Zeit ein jeweiliger Verschiebungsvektor bestimmt werden. Außerdem kann das korrelative Verfahren derart ausgestaltet werden, dass es unabhängig von dem Vorhandensein eines Codes im Bild oder im Nachfolgebild durchgeführt werden kann. Es kann also immer ein jeweiliger Verschiebungsvektor zwischen einem Bild und seinem Nachfolgebild bestimmt werden, selbst dann, wenn kein Code in den Bildern enthalten ist.

Die vorstehenden Ausführungen beziehen sich auf optische Codes. Das erfindungsgemäße Detektionssystem ist allerdings auch dazu geeignet, andere optisch detektierbare Elemente zu detektieren und unter Verwendung der - vorzugsweise mit dem beschriebenen korrelativen Verfahren bestimmten - Verschiebungsvektoren über eine aufgenommene Sequenz von Bildern, wie vorstehend in Bezug auf die optischen Codes beschrieben wurde, zu verfolgen bzw. zu "tracken". Was den Vorgang des Tracking angeht, so kann mittels des erfindungsgemäßen Detektionssystems - in der gleichen Weise wie ein optischer Code getrackt wird - somit auch ein anderes optisch detektierbares Element über die Bildsequenz verfolgt werden. Die hierin bzgl. des Tracking gemachten Ausführungen gelten somit nicht nur für optische Codes, sondern auch für andere optisch detektierbare Elemente.

Bei einem solchen optisch detektierbaren Element kann es sich beispielsweise um eine Kante oder Ecke des das Lesefeld des Sensors durchlaufenden Objekts, um eine wie auch immer ausgestaltete Markierung auf dem Objekt, um eine Kontur, die am Objekt oder auf dem Objekt vorgesehen ist, oder um ein sonstiges Element auf dem Objekt handeln, das z. B. über eine Blob-Detektion von dem Detektionssystem erfasst werden kann. Bei einer Blob-Detektion kann zum Beispiel der Schwerpunkt eines segmentierten Einzelelements in einem aufgenommenen Bild detektiert und mittels des Detektionssystems über die aufgenommene Bildsequenz verfolgt werden.

Auch bezüglich solcher optisch detektierbarer Elemente kann das Detektionssystem dazu ausgebildet sein, anhand wenigstens eines Verschiebungsvektors Paare von optischen Elementen zu identifizieren, wobei ein jeweiliges Elemente-Paar aus einem ersten Element und dem gleichen, in einem späteren Bild detektierten zweiten Element gebildet ist. In verschiedenen Bildern detektierte optische Elemente können als die gleichen Elemente erkannt und zu einem Elemente-Paar zusammengefasst werden. Dabei können zur Verifikation, dass es sich bei einem Elemente-Paar tatsächlich um die gleichen Elemente handelt, z. B. in den Elementen vorhandene Flächen- oder Konturmerkmale herangezogen und miteinander verglichen werden.

Bevorzugte Ausführungsformen und Weiterbildungen der Erfindung ergeben sich aus der Beschreibung, den Zeichnungen sowie den abhängigen Ansprüchen.

Nachfolgend wird die vorliegende Erfindung beispielhaft unter Bezugnahme auf die beigefügten Figuren beschrieben. Es zeigen, jeweils schematisch,

Fig. 1    eine seitliche Ansicht eines erfindungsgemäßen Detektionssystems,

Fig. 2    ein i-tes Bild und ein nachfolgendes (i+1)-tes Bild einer mittels des Detektionssystems von Fig. 1 aufgenommenen Bildsequenz,

Fig. 3    eine Trackingliste,

Fig. 4    eine Tabelle von möglichen Resultatklassen, die beim Auslesen eines Codes auftreten können, und

Fig. 5    ein i-tes Bild und ein nachfolgendes (i+1)-tes Bild einer mittels des Detektionssystems von Fig. 1 aufgenommenen Bildsequenz zur Bestimmung eines Verschiebungsvektors zwischen den beiden Bildern.

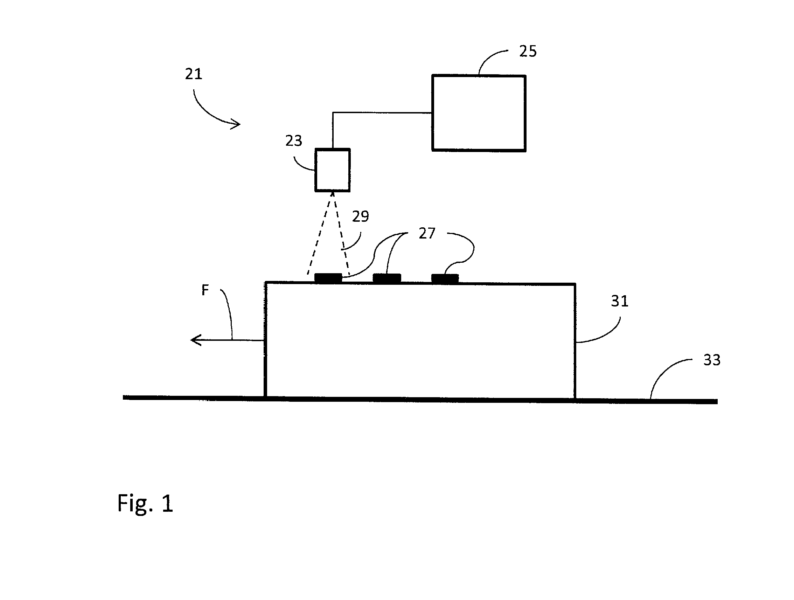

Das in Fig. 1 gezeigte Detektionssystem 21 weist einen Sensor 23 und eine damit gekoppelte Auswerteeinrichtung 25 auf, die beispielsweise von einem Computer gebildet sein kann. Das Detektionssystem 21 ist dazu ausgebildet, optische Codes 27 zu erfassen, die in ein Lesefeld 29 des Sensors 23 gelangen bzw. durch das Lesefeld 29 transportiert werden. Bei dem dargestellten Beispiel sind die Codes 27 auf einem Objekt 31 angebracht, das auf einem Förderband 33 liegend in einer Förderrichtung F derart gefördert wird, dass die Codes 27 das Lesefeld 29 durchlaufen.

Bei dem Förderband 33 kann es sich beispielsweise um ein Gepäckförderband handeln, wie sie auf Flughäfen zu finden sind. Bei dem Objekt 31 kann es sich beispielsweise um einen Koffer handeln, der von dem Gepäckförderband 33 von seiner Aufgabestelle, z.B. einem Check-in Schalter auf einem Flughafen, zu einer bestimmten Verladestelle gefördert wird.

Anhand des Detektionssystems 21 können die Codes 27 auf dem Objekt 31 erkannt und ausgelesen werden, z. B. um den Weitertransport des Objekts 31 längs des Förderbands 33 zu seiner bestimmungsgemäßen Verladestelle zu steuern. Dabei ist der Sensor 23, der auch als Sensorarray ausgestaltet sein kann, in an sich bekannter Weise dazu ausgebildet, einen im Lesefeld 29 befindlichen Code 27 zu erkennen und zu dekodieren.

Bei dem gezeigten Beispiel sind drei Codes 27 auf dem Objekt 31 angeordnet. Es können auch weniger oder mehr als drei Codes 27 vorgesehen sein. Zum Beispiel kann auch nur ein Code 27 auf dem Objekt 31 angebracht sein.

Bei dem Code 27 handelt es sich insbesondere um einen Barcode, einen Matrixcode oder einen sonstigen an sich aus dem Stand der Technik bekannten optischen Code.

Das jeweilige Objekt 31 ist normalerweise größer als das Lesefeld 29 des Sensors 23. Daher wird eine Sequenz von Bildern von dem Objekt 31 aufgenommen, um alle Codes 27 auf dem Objekt 31 erfassen und dekodieren zu können. Genauer wird in jedem Bild der jeweilige Teil des Objekts 31, der sich zur jeweiligen Aufnahmezeit des jeweiligen Bildes im Lesefeld 29 befindet, aufgenommen. Durch die aufgenommene Sequenz von Bildern wird erreicht, dass nach und nach der gesamte das Lesefeld 29 durchlaufende Bereich des Objekts 31 aufgenommen wird und somit sämtliche in dem Bereich angeordnete Codes 27 erfasst werden.

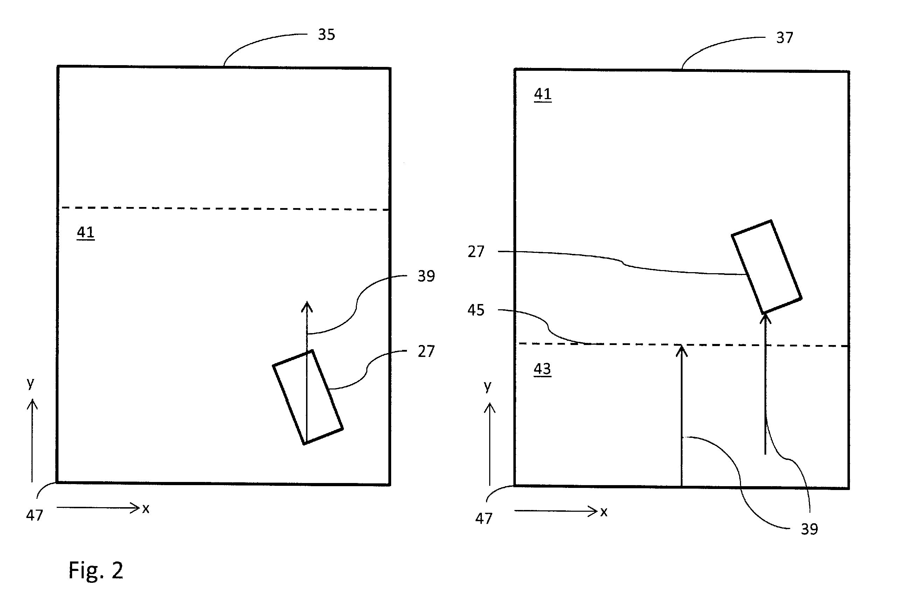

In Fig. 2 ist beispielhaft das i-te Bild 35 und das nachfolgende (i+1)-te Bild 37 der während des Durchlaufs des Objekts 31 durch das Lesefeld 29 aufgenommenen Bildsequenz dargestellt. Wie Fig. 2 zeigt, ist im (i+1)-ten Bild 37 der darin aufgenommene Code 27 gegenüber dem gleichen, im i-ten Bild 35 aufgenommenen Code 27 um einen Verschiebungsvektor 39 verschoben. Der Verschiebungsvektor 39 kann bspw. auf die in den Bildern 35, 37 enthaltenen Pixel bezogen sein. Ein bestimmter Pixel im Bild 35 ist somit im Bild 37 um den Verschiebungsvektor 39 bezogen auf seine Lage im Bild 35 verschoben. Die Verschiebung rührt daher, dass in der Zeitspanne zwischen der Aufnahme der beiden Bilder 35 und 37 das Objekt 31 mittels des Förderbands 33 in Förderrichtung F um eine bestimmte Strecke weitergefördert wurde.

Allgemeiner gesagt ist im (i+1)-ten ein erster Bildbereich 41, der auch im i-ten Bild enthalten ist, aufgrund der Förderung des Objekts 31 längs der Förderrichtung F um den Verschiebungsvektor 39 verschoben. Der erste Bildbereich 41 wird nachfolgend auch Wiedererkennungsbereich 41 genannt, da dieser bezogen auf das (i+1)-te Bild 37 bereits im vorhergehenden i-ten Bild 35 aufgenommen wurde.

Der im unteren Teil des Bildes 37 bis zu der gestrichelten Linie (Grenze 45) aufgenommene zweite Bildbereich 43 stellt einen neuen Bildbereich dar und wird daher nachfolgend auch als neuer Bildbereich 43 bezeichnet. Dieser Bildbereich wurde im Bild 35 nicht aufgenommen. Die durch die gestrichelte Linie eingezeichnete Grenze 45 zwischen dem Wiedererkennungsbereich 41 und dem neuen Bildbereich 43 verläuft um den Verschiebungsvektor 39 versetzt zum unteren Bildrand des Bildes 37.

Das Detektionssystem 21 bzw. dessen Auswerteeinrichtung 25 ist dazu ausgebildet, den jeweiligen Verschiebungsvektor 39 zu bestimmen, der angibt, wie weit der in Bild 37 enthaltene erste Bildbereich 41, der auch im Vorgängerbild 35 enthalten ist, relativ zum Vorgängerbild 35 verschoben ist, und zwar unter Verwendung der jeweiligen aufeinanderfolgenden Bilder 35, 37. Dabei ist das Detektionssystem 21 derart ausgebildet, dass es allein anhand zweier aufeinanderfolgender Bilder 35, 37 und insbesondere ohne Verwendung weiterer Sensoren neben dem Sensor 23 den Verschiebungsvektor 39 bestimmen kann.

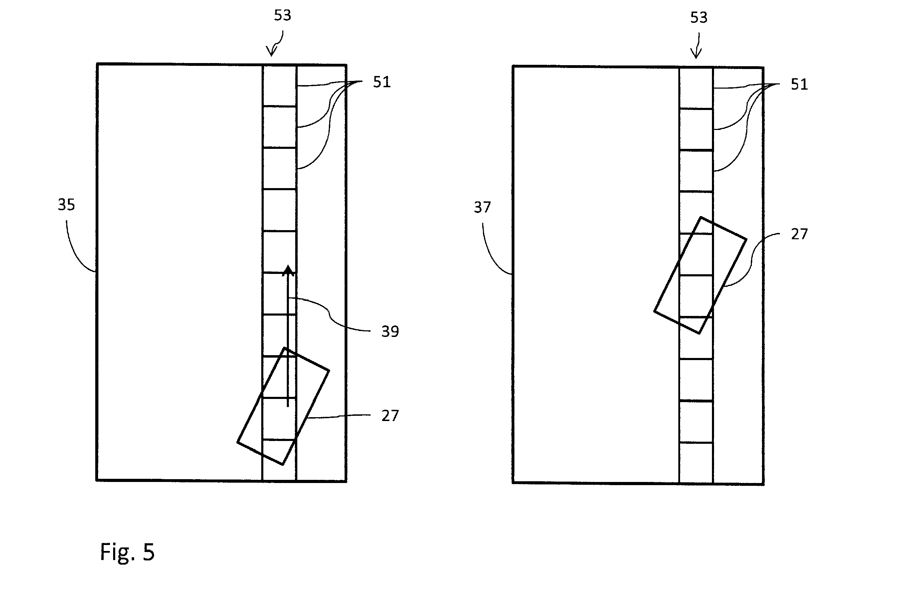

Bevor allerdings nachfolgend beispielhaft erläutert wird (siehe Fig. 5 und die entsprechende Beschreibung), wie der Verschiebungsvektor 39 ermittelt werden kann, wird zunächst erläutert, wie die jeweiligen zwischen aufeinanderfolgenden Bildern 35, 37 ermittelten Verschiebungsvektoren 39 zum Verfolgen der Codes 27 innerhalb der aufgenommenen Bildsequenz eingesetzt werden können.

Mit Verfolgen bzw. Tracken der Codes 27 ist insbesondere gemeint, dass anhand der Position des Codes 27 im Bild 35 und des Verschiebungsvektors 39 die Position des Codes 27 im Bild 37 vorhergesagt werden kann, ohne dass oder bevor die Position des Codes 27 im Bild 37 ermittelt wird. Die vorhergesagte Position des Codes 27 kann dabei als fiktive Position des Codes 27 im Bild 37 bezeichnet werden, da es sich hierbei um eine berechnete Position handelt.

Die Position des Codes 27 im Bild 35 kann dabei ebenfalls als fiktive Position anhand der Position des Codes 27 im Vorgängerbild i-1 und dem anhand des Vorgängerbilds i-1 und dem i-ten Bild 35 berechneten Verschiebungsvektor berechnet und/oder durch Auswerten des Bilds 35 bestimmt worden sein.

Die Position des Codes 27 in den Bildern 35, 37 kann durch ein X- und Y-Koordinatenpaar angegeben werden, das zum Beispiel die Position der Mitte oder einer bestimmten Ecke des Codes 27 in dem jeweiligen Bild 35, 37 angibt und sich auf ein im jeweiligen Bild 35, 35 definiertes X, Y- Koordinatensystem bezieht, dessen Ursprung 47 beispielsweise in der linken unteren Ecke des jeweiligen Bildes 35, 37 liegt und von dem aus die x-Achse nach rechts und die y-Achse nach oben verläuft.

Die fiktive Position des Codes 27 in X,Y-Koordinaten des Koordinatensystems des Bildes 37 kann somit aus der Position des Codes 27 im Bild 35 berechnet werden, indem die auf das Koordinatensystem des Bilds 35 bezogen X, Y- Koordinaten der Position des Codes 27 mit dem Verschiebungsvektor 39 addiert werden.

Somit kann jeder einmal erfasste Code 27 über die aufgenommene Sequenz von Bildern verfolgt, also getrackt, werden, indem seine fiktive Position für jedes neu aufgenommene Bild berechnet wird, und zwar anhand des zwischen dem Vorgängerbild und dem neu aufgenommenen Bild berechneten Verschiebungsvektors, wobei die fiktive Position in Bezug zu dem Koordinatensystem des neu aufgenommenen Bildes gesetzt wird. Ein derartiges Weiterverfolgen jedes einmal erfassten Codes 27 kann bis zum letzten Bild der Bildsequenz durchgeführt werden, so dass die fiktive Position jedes Codes 27 bezüglich des letzten Bildes berechnet werden kann. Anhand der berechneten fiktiven Positionen der erfassten Codes 27 ist die relative Lage der Codes 27 auf dem Objekt 31 bekannt, so dass die Codes 27 entsprechend ihrer relativen Lage sortiert werden können. Damit kann z.B. ein gestichtes Gesamtbild des Objekts 31 von der Auswerteeinrichtung 25 erzeugt und ausgegeben werden, in dem die Codes 27 entsprechend ihrer relativen Lage zueinander wiedergegeben sind.

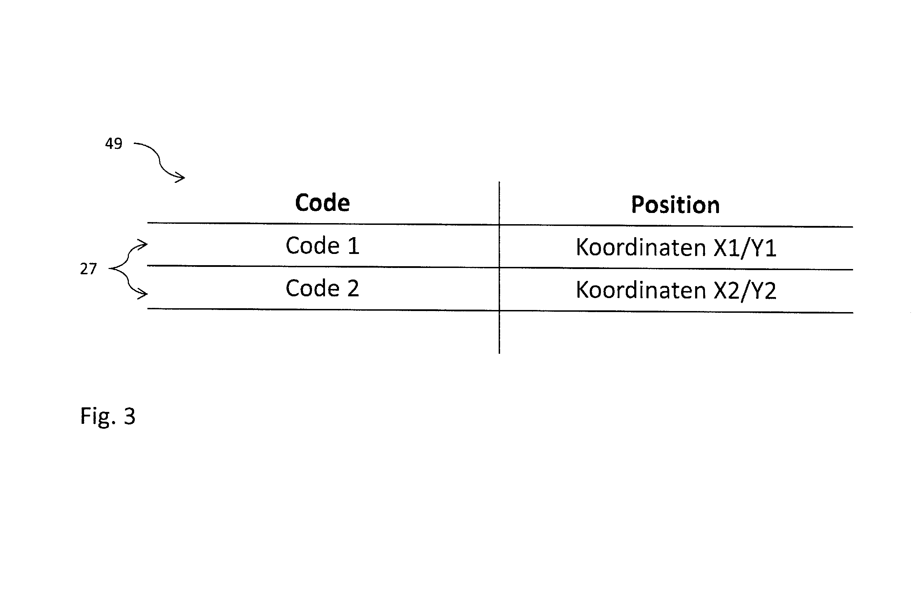

Nach einer bevorzugten Variante wird zum Verfolgen der Codes 27 von der Auswerteeinrichtung 25 eine Trackingliste 49 erstellt, wie sie beispielhaft in Fig. 3 dargestellt ist, und auf einem nicht dargestellten Speicher der Auswerteeinrichtung 25 gespeichert. Der Ablauf, wie anhand der Trackingliste 49 die Codes 27 auf dem Objekt 31 verfolgt bzw. getrackt werden können, wird nachfolgend beschrieben.

Wenn das Objekt 31 in das Lesefeld 29 des Sensors 23 gelangt, startet ein Startsignal, bei dem es sich um ein sogenanntes "Gate-On"-Signal handeln kann, die Aufnahme einer Sequenz von Bildern während das Objekt 31 durch das Lesefeld 23 gefördert wird. Außerdem werden eventuell in der Trackingliste 49 vorhandene Einträge aus einem vorhergehenden Trackingvorgang gelöscht und eine in der Trackingliste 49 erfasste "Anzahl an Codes in der Trackingliste" wird auf null gesetzt.

Anschließend wird ein erstes aufgenommen Bild i=1 auf Vorhandensein von Codes 27 ausgewertet. Ein detektierter Code 27 wird dekodiert. Außerdem wird die Position des Codes 27 im ersten Bild i=1 bestimmt. Das Dekodierresultat jedes Codes 27 wird zusammen mit seiner Position in der Trackingliste 49 gespeichert, wie in Fig. 3 beispielhaft und vereinfacht für zwei Codes 27 (Code 1, Code 2) dargestellt ist. Die Position des jeweiligen Codes 27 wird dabei in Form von X, Y-Koordinaten bezogen auf das Koordinatensystem des ersten Bilds i=1 gespeichert.

Außerdem wird die in der Trackingliste 49 erfasste "Anzahl an Codes in der Trackingliste" entsprechend der Anzahl an detektieren Codes 27 geändert. In der Liste 49 ist außerdem noch für jeden Code 27 ein Feld (in Fig. 3 nicht gezeigt) enthalten, dass angibt, ob der Code 27 schon getrackt wurde. Da es sich um das erste Bild i=1 handelt und somit noch kein Tracking stattgefunden hat, wird dieses sogenannte Feld "Zustand des Dekodierresultats" auf "Not-tracked" gesetzt.

Außerdem wird der Verschiebungsvektor 39 auf null gesetzt, d.h. V=(0,0), wobei sich gemäß der an sich bekannten Vektorschreibweise die Zahl vor dem Komma auf eine Verschiebung in X-Richtung und die Zahl nach dem Komma auf eine Verschiebung in Y-Richtung bezieht.

Nachdem das zweite Bild i=2 aufgenommen wurde, wird der Verschiebungsvektor 39 (vgl. Fig. 2) zwischen dem zweiten Bild i=2 und dem ersten Bild i=1 berechnet, wie nachstehend noch beispielhaft ausgeführt werden wird. Mit Bezug auf Fig. 2 handelt es sich bei dem zweiten Bild i=2 um das (i+1)-te Bild 37, während es sich bei dem ersten Bild i=1 um das i-te Bild 35 handelt.

Anhand des Verschiebungsvektors 39 wird das zweite Bild 37 in den Wiedererkennungsbereich 41 und den neuen Bildbereich 43 eingeteilt. Außerdem wird in der Trackingliste 49 die gespeicherte Position jedes erfassten Codes 27 durch seine jeweilige fiktive Position aktualisiert, indem der Verschiebungsvektor 39 und die gespeicherten Koordinaten nach den Regeln der Vektoraddition addiert werden. Die fiktive Position gibt dabei die berechnete Position des jeweiligen Codes 27 im zweiten Bild 37 an.

Dabei kann es vorkommen, dass die virtuelle Position eines Codes 27 außerhalb des zweiten Bildes 37 liegt, so dass der Code 27 nicht mehr im zweiten Bild 37 auftritt. Für einen derartigen Code 27 kann in der Liste 49 das Feld "Zustand des Dekodierresultats" auf "Finished-tracking" gesetzt werden, da dieser Code 27 den nachverfolgbaren Bereich verlassen hat. Für einen derartigen Code wird aber weiterhin bezogen auf die Nachfolgebilder die jeweilige virtuelle Position berechnet und in der Trackingliste 49 aktualisiert.

Außerdem wird das zweite Bild 37 dekodiert. Dabei werden Codes 27 im neuen Bildbereich 43 - wie die im ersten Bild 35 erstmalig detektierten Codes 27 - der Trackingliste 49 hinzugefügt und die in der Trackingliste 49 erfasste "Anzahl an Codes in der Trackingliste" entsprechend erhöht. Für diese Codes 27 wird außerdem das jeweilige Feld "Zustand des Dekodierresultats" auf "Not-tracked" gesetzt.

Alle im Wiedererkennungsbereich 41 des zweiten Bildes 37 dekodierten Codes 27 werden mit den bereits in der Trackingliste 49 gespeicherten Codes 27 verglichen und zwar anhand ihrer Koordinaten. Dabei werden alle im Wiedererkennungsbereich 41 detektierten Codes 27 bzgl. ihrer jeweiligen Position auf einen entsprechenden Eintrag in der Trackingliste 49 hin untersucht, in der die Positionen der gespeicherten Codes 27 die bzgl. des zweiten Bildes aktualisierten, fiktiven Positionen sind.

Insbesondere lassen sich sogenannte Paare von Codes identifizieren, wobei ein jeweiliges Code-Paar aus einem in der Trackingliste 49 gespeicherten ersten Code und dem gleichen, im zweiten Bild 37 dekodierten zweiten Code gebildet ist. Zu einem im Wiedererkennungsbereich 41 des zweiten Bildes 39 erfassten zweiten Code kann dabei der in der Liste 49 gespeicherte erste Code dadurch identifiziert werden, dass die aus dem zweiten Bild bestimmte Position des zweiten Codes mit den fiktiven Position der in der Liste 49 gespeicherten Codes verglichen wird. Dabei wird angenommen, dass der zweite Code und ein erster Codes aus der Liste 49 ein Code-Paar bilden, wenn die fiktive Position des ersten Codes und die Position des zweiten Codes zumindest im Wesentlichen übereinstimmen.

Lässt sich ein derartiges Code-Paar identifizieren, so kann das in der Liste 49 für den ersten Code gespeicherte Dekodierresultat mit dem durch Dekodieren des zweiten Codes gewonnenen Dekodierresultat verglichen werden, insbesondere um die Dekodierresultate miteinander zu "verrechnen". Zusätzlich kann das Feld "Zustand des Dekodierresulats" für den Code auf "Active-Tracking" gesetzt werden.

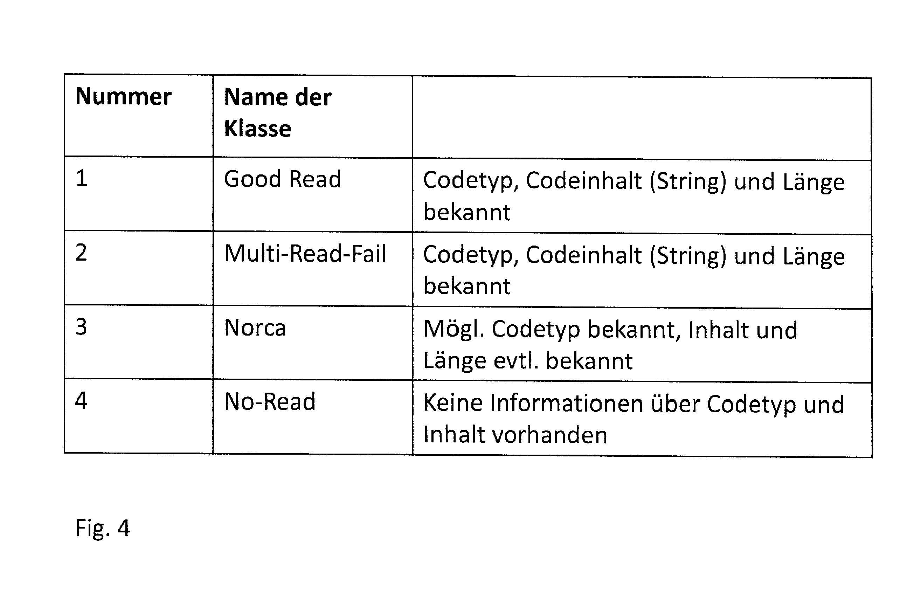

Bevor nun beispielhaft erläutert wird, wie der Vergleich der Dekodierresultate eines Code-Paares erfolgen kann, werden zunächst die möglichen in Fig. 4 tabellarisch gezeigten Resultatklassen, die beim Auslesen eines Codes durch den Sensor 23 auftreten können, näher erläutert.

Die Klasse mit der Nummer 1 betrifft den Fall, dass ein Code erfolgreich dekodiert wurde, den sogenannten Good-Read Fall, wobei der Codetyp, der Codeinhalt (String) sowie die Codelänge ermittelt werden konnten.

Die Klasse mit der Nummer 2 betrifft den Fall, dass ein Code zwar erfolgreich dekodiert wurde, aber dabei nicht mehrfach gelesen werden konnte. Diese Klasse wird als Multi-Read-Fail-Klasse bezeichnet, wobei der Codetyp, der Codeinhalt (String) sowie die Codelänge ermittelt werden konnten. Allerdings kann die Code-Sicherheit, die beim Lesen von Barcodes erwartet wird, verletzt sein.

Die Klasse mit der Nummer 3 betrifft den Fall, dass ein Code nicht mit hinreichender Sicherheit dekodiert werden konnte, wobei allerdings der Codetyp, der Codeinhalt und die Codelänge eventuell ermittelt werden konnten. Die Klasse mit der Nummer 3 wird dabei als Norca-Klasse bezeichnet, wobei Norca für No-Read-Case-Analysis steht.

Die Klasse mit der Nummer 4 betrifft den Fall, dass ein Code nicht erfolgreich dekodiert werden konnte. Diese Klasse wird auch als No-Read-Klasse bezeichnet.

Die Dekodierresultate eines ermittelten Code-Paares können nun folgendermaßen miteinander verglichen bzw. verrechnet werden:

Fall a: Weist sowohl der erste Code als auch der zweite Code die Resultatklasse 1 auf (Good-Read), kann der Codeinhalt und Symboltyp, der dem Codetyp entspricht, beider Codes miteinander verglichen werden. Stimmen der Codeinhalt und der Symboltyp für beide Codes überein, wird, insbesondere bei Barcodes, ein in der Liste 49 erfasster Multi-Read-Wert für den ersten Code aufaddiert und ein ebenfalls erfasster Tracking-Counter für den ersten Code um eins erhöht. Außerdem können, soweit der Sensor 23 bzw. die Auswerteeinheit 25 diese ermitteln können, sogenannte Verifier-Werte zur Verifikation und Featurevektoren des ersten und zweiten Codes miteinander verrechnet werden. Dabei können z.B. Bits im Featurevektor logisch mit einer "oder"-Verknüpfung verknüpft werden.

Ein Featurevektor kann bitweise verschiedene Zustände der Dekodierung und/oder Eigenschaften einer Dekodierregion kodieren. Beispiele für solche Zustände sind: Ist die Codelänge richtig? ja/nein. Überlappt der Code? ja/nein. Ist die Checksumme eines Codes korrekt? ja/nein. Ist eine Quiet-Zone verletzt? ja/nein. Ein Featurevektor kann aus 32 Bits bestehen und somit 32 verschiedene Einzel-Zustände, die sich während eines Segmentierungs- und Dekodierungsprozesses ergeben, in einem Bitfeld enthalten.

Fall b: Weist sowohl der erste Code als auch der zweite Code die Resultatklasse 3 (Norca) auf, dann ist möglicherweise kein Codeinhalt vorhanden, so dass die beiden Codes nur bzgl. des Symboltyps überprüft werden. Stimmen die Inhalte überein, werden insbesondere bei Barcodes der in der Liste 49 erfasste Multi-Read-Wert für den ersten Code akkumuliert und der Tracking-Counter für den ersten Code um eins erhöht. Außerdem können, soweit der Sensor 23 bzw. die Auswerteeinheit 25 diese ermitteln können, sogenannte Verifier-Werte und Featurevektoren des ersten und zweiten Codes miteinander verrechnet werden.

Fall c: Weist der erste Code die Resultatklasse 3 (Norca) und der zweite Code die Resultatklasse 1 (Good-Read) auf (oder umgekehrt), überschreiben die Informationen der Resultatklasse 1 die Informationen der Resultatklasse 3. Insbesondere bei Barcodes übernimmt der in der Liste 49 erfasste Multi-Read-Wert den entsprechend Wert, der in der Resultatklasse 1 bestimmt wurde, und der Tracking-Counter für den ersten Code wird um eins erhöht. Außerdem können, soweit der Sensor 23 bzw. die Auswerteeinheit 25 diese ermitteln können, sogenannte Verifier-Werte und Featurevektoren des ersten und zweiten Codes miteinander verrechnet werden.

Fall d: Bei Barcodes wird, falls der erste Code die Resultatklasse 2 (Multi-Read-Fail) und der zweite Code die Resultatklasse 2 (Multi-Read-Fail) aufweist, verfahren wie im Fall a, da auch bei der Resultatklasse 2 immer ein Codeinhalt vorhanden ist. Am Ende wird außerdem überprüft, ob ein vorgegebener Multi-Read Schwellwert für das Erreichen der Klasse 1 überschritten wurde. Falls ja, wird von der Resultatklasse 2 in die Resultatklasse 1 gewechselt.

Fall e: Bei Barcodes wird, falls der erste Code die Resultatklasse 1 (Good-Read) und der zweite Code die Resultatklasse 2 (Multi-Read-Fail) aufweist oder umgekehrt, verfahren wie im Fall a, da immer ein Codeinhalt bekannt ist.

Fall f: Bei Barcodes werden, falls der erste Code die Resultatklasse 3 (Norca) und der zweite Code die Resultatklasse 2 (Multi-Read-Fail) aufweist oder umgekehrt, die Informationen der Resultatklasse 3 durch die Informationen der Resultatklasse 2 überschrieben. Dabei kann zuvor ein Test auf gleichen Symboltyp und/oder Inhalt durchgeführt werden. Gegebenenfalls kann in der Trackingliste die Resultatklasse 3 in die Resultatklasse 2 geändert werden. Außerdem können, soweit der Sensor 23 bzw. die Auswerteeinheit 25 diese ermitteln können, sogenannte Verifier-Werte und Featurevektoren des ersten und zweiten Codes miteinander verrechnet werden.

Auf die vorstehend beschriebene Weise können die Informationen aller in der Trackingliste 49 gespeicherten Codes 27, die im Wiedererkennungsbereich 41 des zweiten Bilds 37 nochmals dekodiert werden, verifiziert und/oder vervollständigt werden.

Der vorstehend mit Bezug auf das zweite Bild i=2 beschriebene Ablauf wird in der entsprechenden Weise für alle nachfolgenden Bilder bis zum letzten Bild der aufgenommenen Sequenz von Bildern durchgeführt. Die Aufnahme der Sequenz von Bildern wird dabei durch ein Stoppsignal, das auch als Gate-Off-Signal bezeichnet wird, gestoppt, wenn vom Detektionssystem 21 erkannt wird, dass das Objekt 33 das Lesefeld 29 verlassen hat.

Durch den zuvor beschriebenen Ablauf wird nach und nach die Trackingliste 49 aufgebaut, in der sämtliche auf dem Objekt 31 vorhandene und durch das Lesefeld 29 transportierte Codes 27 in dekodierter Form enthalten sind. Da außerdem von Bild zu Bild die jeweilige Position jedes Codes 27 durch seine jeweilige fiktive Position aktualisiert wurde, ist am Ende in der Trackingliste 49 die jeweilige fiktive Position bezogen auf das letzte Bild der Bildsequenz für jeden Code 27 enthalten, so dass die relative Lage der Codes 27 zueinander bekannt ist.

Anhand der Trackingliste 29 kann somit ein virtuelles, gestichtes Bild des Objekts 31 erstellt werden, das keine Begrenzung bzgl. des Lesefelds 29 kennt und in dem die Codes 27 ihrer relativen Lage entsprechend wiedergegeben sind. Die Auswerteeinheit 25 kann dann die Trackingliste 49 wenigstens auszugsweise an eine nachgeordnete Einrichtung, wie etwa eine Ausgabeeinrichtung, weiterleiten.

Die im Wiedererkennungsbereich 41 des (i+1)-ten Bildes 37 enthaltenen Codes 27 werden, wie vorstehend erläutert wurde, unter normalen Umständen bereits im vorhergehenden i-ten Bild 35 in der Trackingliste 49 erfasst und dekodiert. Insbesondere wenn im i-ten Bild 35 ein Code 27 mit einem Dekodier-Resultat gemäß den in Fig. 4 gezeigten Klassen 1 und 2 dekodiert werden konnte, so ist es nicht mehr erforderlich, den Code 27 im i-ten Bild 35 nochmals zu dekodieren.

Nach einer abgewandelten Variante kann anhand der in der Trackingliste 49 erfassten Position eines Codes 27 im i-ten Bild 35 anhand des zwischen dem i-ten Bild 35 und dem (i+1)-ten Bild 37 bestimmten Verschiebungsvektors 39 die fiktive Position des Codes 27 im (i+1)-ten Bild 37 bestimmt werden. An der fiktiven Position bzw. in einer Region um die fiktive Position herum wird sich der bereits in der Trackingliste 49 erfasste Code 27 befinden, so dass dieser Code 27 im (i+1)-ten Bild nicht mehr dekodiert werden muss, wodurch eine entsprechende Zeitersparnis erreicht werden kann.

Der Sensor 23 arbeitet normalerweise derart, dass ein aufgenommenes Bild zunächst in Regionen segmentiert und anschließend die Regionen mit den darin enthaltenen Codes dekodiert werden. Wurde entsprechend den vorstehenden Ausführungen bestimmt, dass in einer Region im (i+1)-ten Bild 37 ein bereits dekodierter Code 27 liegt, so kann die entsprechende Region nicht nur von der Dekodierung, sondern auch von der Segmentierung ausgeschlossen bzw. ausmaskiert werden. Dadurch kann zur Erfassung und Weiterverfolgung der Codes 27 über die Sequenz von Bildern hinweg eine erhebliche Einsparung an Rechenzeit für die Segmentierung und/oder Dekodierung eines Bildes erreicht werden.

Nach einer weiteren abgewandelten Variante kann im (i+1)-ten Bild 37 der Wiedererkennungsbereich 41 komplett für die Dekodierung der Codes 27 ausgeblendet werden. D.h. im Wiedererkennungsbereich 41 enthaltene Codes 27 werden überhaupt nicht mehr dekodiert. Außerdem kann auf eine vor der Dekodierung stattfindende Segmentierung des kompletten Wiedererkennungsbereichs 41 verzichtet werden.

Bevor weiter unten mit Bezug auf die Fig. 5 näher erläutert wird, wie nach einer bevorzugten Variante ein Verschiebungsvektor 39 zwischen dem i-ten Bild 35 und dem (i+1)-ten Bild 37 bestimmt werden kann, wird erläutert, wie der jeweilige Verschiebungsvektor 39 zwischen jeweils zwei aufeinanderfolgenden Bildern 35, 37 bestimmt werden kann, indem ein optisch detektierbares Element im i-ten Bild 35 und im (i+1)-ten Bild 37 detektiert und der Verschiebungsvektor 39 als Verschiebung zwischen dem in beiden Bildern detektierten optischen Element bestimmt wird.

Bei einem solchen optisch detektierbaren Element kann es sich beispielsweise um eine Kante oder eine Ecke des das Lesefeld des Sensors durchlaufenden Objekts, um eine wie auch immer ausgestaltete Markierung auf dem Objekt, um eine Kontur, die am Objekt oder auf dem Objekt vorgesehen ist, oder um ein sonstiges Element auf dem Objekt handeln, das z.B. über eine Blob-Detektion von dem Detektionssystem in den aufgenommenen Bildern erfasst werden kann.

Bei der Blob-Detektion kann z.B. der Schwerpunkt eines segmentierten Einzelelements in dem i-ten Bild 35 und in dem (i+1)-ten Bild 37 jeweils detektiert und der Verschiebungsvektor 39 somit zwischen den detektierten Schwerpunkten bestimmt werden.

Alternativ kann mit einem sogenannten Shape-Locator dieselbe Kontur sowohl im i-ten Bild 35 als auch im (i+1)-ten Bild 37 erkannt werden und der Verschiebungsvektor 39 kann derart bestimmt werden, dass er angibt, wie weit die im (i+1)-ten Bild 37 detektierte Kontur relativ zu ihrer Lage im Vorgängerbild 35 verschoben ist.

Zur Verifikation, dass in den aufeinanderfolgenden Bildern 35, 37 tatsächlich dasselbe Element detektiert wurde, könnte die Fläche, die Kontur oder eine sonstige Eigenschaft des Elements in beiden Bildern 35, 37 bestimmt und miteinander verglichen werden.

Nachfolgend wird nun mit Bezug auf Fig. 5 erläutert, wie nach einer besonders bevorzugten Variante ein Verschiebungsvektor 39 zwischen dem i-ten Bild 35 und dem (i+1)-ten Bild 37 bestimmt werden kann. Dabei kommt ein korrelatives Verfahren zum Einsatz.

Wie vorstehend bereits erwähnt wurde, ist der Sensor 23 in an sich bekannter Weise dazu ausgebildet, ein aufgenommenes Bild zunächst zu segmentieren und das segmentierte Bild zu dekodieren. Durch die von dem Sensor 23 vorgenommene Segmentierung werden für jede Einzelkachel 51 des jeweiligen Bildes 35, 37 Daten gewonnen, die zum Beispiel die jeweilige Standardabweichung der Farb- oder Grauwerte in der jeweiligen Einzelkachel 51 enthalten.

Für das i-te Bild 35 wird diejenige Spalte 53 bestimmt, in welcher die Summe der Standardabweichungen der Einzelkacheln 51 in der Spalte 53 maximal ist. Normalerweise handelt es sich bei der Spalte 53 mit maximaler Summe der Standardabweichungen um diejenige Spalte, in der zumindest ein großer Teil eines Codes 27 liegt und somit verhältnismäßig viele verschiedene Farb- oder Grauwerte in der Spalte 53 auftreten. Allerdings kann das Verfahren zur Bestimmung des Verschiebungsvektors 39 auch durchgeführt werden, wenn kein Code 27 in den Bildern 35, 37 vorhanden ist, zumal im i-ten Bild 35 immer eine Spalte bestimmt werden kann, in der die Summe der Standardabweichungen der Farb- oder Grauwerte in den Einzelkacheln 51 maximal ist.

Innerhalb der im i-ten Bild 35 selektierten Spalte 53 wird im Zentrum der Spalte 35 ein Grauwertprofil, das auch unterabgetastet sein kann, über die gesamte Bildhöhe, also in Längsrichtung der Spalte 53 gesehen, ermittelt und, insbesondere zusammen mit einem die Spalte 53 kennzeichnenden Index, abgespeichert.

Nachdem das (i+1)-te Bild 37 aufgenommen ist, kann in der entsprechenden Spalte 53 des Bilds 37 ebenfalls das Grauwertprofil über die Bildhöhe ermittelt werden. Anschließend wird das aus dem i-ten Bild 35 entnommene Grauwertprofil mit dem aus dem (i+1)-ten Bild 37 entnommenen Grauwertprofil korreliert. Insbesondere wird die untere Hälfte des Grauwertprofils des i-ten Bildes 35 gegen das Grauwertprofil des (i+1)-ten Bildes 37 korreliert. Dabei wird Pixel für Pixel die untere Hälfte des gespeicherten Grauwertprofils des i-ten Bilds 35 gegen das Grauwertprofil des (i+1)-ten Bildes 37 nach oben verschoben und für jede Verschiebung ein Korrelationskoeffizient (z.B. nach Pearson) berechnet.

Seien dabei $x_i$ n Samples aus dem Grauwertprofil der unteren Hälfte des i-ten Bildes 35 und $y_i$ die entsprechenden n Samples aus dem Grauwertprofil des (i+1)-ten Bildes 37, so kann der Korrelationskoeffizient r durch folgende Gleichung berechnet werden:

$$r = \frac{\sum_{i=1}^{n} x_i y_i - \frac{1}{n} \sum_{i=1}^{n} x_i \sum_{i=1}^{n} y_i}{\sqrt{\sum_{i=1}^{n} x_i^2 - \frac{1}{n}\left(\sum_{i=1}^{n} x_i\right)^2} * \sqrt{\sum_{i=1}^{n} y_i^2 - \frac{1}{n}\left(\sum_{i=1}^{n} y_i\right)^2}}$$

Der für jede Verschiebung erhaltene Korrelationskoeffizient r wird zusammen mit der entsprechenden Verschiebung u gespeichert. Nachdem das Grauwertprofil der unteren Hälfte des i-ten Bildes 35 pixelweise um die maximal mögliche Verschiebung, die der halben Bildhöhe entspricht, verschoben wurde und zu jeder Verschiebung der entsprechende Korrelationskoeffizient r ermittelt wurde, wird der maximale Korrelationskoeffizient $r_{max}$ zusammen mit seiner Verschiebung u aus den ermittelten Korrelationskoeffizienten r herausgesucht.

Das gleiche Verfahren wird mit dem Grauwertprofil der oberen Hälfte des i-ten Bildes 35 durchgeführt, das Pixel für Pixel gegen das Grauwertprofil des (i+1)-ten Bildes 37 nach unten verschoben wird, wobei wiederum für jede Verschiebung entsprechend der vorstehenden Gleichung ein jeweiliger Korrelationskoeffizient r' berechnet wird. Aus den so bestimmten Korrelationskoeffizienten r' wird wiederum der größte Korrelationskoeffizient $r_{max}'$ zusammen mit seiner zugehörigen Verschiebung u' herausgesucht.

Der größere Korrelationskoeffizient $r_{max}$ oder $r_{max}'$ von u bzw. u' selektiert nun die Bewegungsrichtung und damit den Verschiebungsvektor 39, der der Verschiebung u entspricht, wenn $r_{max}$ größer ist als $r_{max}$', und andernfalls der Verschiebung u' entspricht.

Bei der Annahme einer relativ konstanten Fördergeschwindigkeit kann nach einer erstmaligen Berechnung des Verschiebungsvektors zwischen dem ersten Bild i=1 und dem zweiten Bild i=2 für alle nachfolgenden Bildpaare der Korrelationsbereich eingeschränkt werden, da für alle nachfolgenden Bildpaare der jeweilige Verschiebungsvektor aufgrund der als relativ konstant angenommenen Fördergeschwindigkeit zumindest im Wesentlichen dem zwischen dem ersten und zweiten Bild bestimmten Verschiebungsvektor entsprechen wird.

Nach einer Variante kann ein Parabelfit durch das diskrete Maximum $r_{max}$ bzw. $r_{max}$' und seine Nachbarstellen ausgeführt werden. Dadurch kann die Genauigkeit bei der Bestimmung des Verschiebungsvektors auf Subpixelebene ausgeweitet werden.

Zu den Bildern 35, 37 kann der Verschiebungsvektor 39 sodann gespeichert und, wie vorstehend beschrieben wurde, zum Verfolgen der Codes 27 eingesetzt werden.

Anhand des Verschiebungsvektors 39 und eines Umrechnungswertes zur Umrechnung der in den Bildern 35, 37 aufgenommenen Pixel in Millimeter sowie einer Framerate des Lesetors 29 kann außerdem die Fördergeschwindigkeit des Objekts 31 ohne Verwendung eines weiteren Sensors bestimmt werden.

Das vorstehende Verfahren zur Bestimmung des Verschiebungsvektors 39 wurde mit Bezug auf eine normalisierte Grauwertekorrelation beschrieben, die bezogen auf die Spalte 53 durchgeführt wurde. Dies ist nur beispielhaft zu sehen. Anstelle der Spalte 53 kann zum Beispiel auch eine Grauwertekorrelation bezüglich einer Zeile im i-ten Bild 35 und der entsprechenden Zeile im (i+1)-ten Bild 37 durchgeführt werden, z.B. bezüglich derjenige Zeile im Bild 35, deren Einzelkacheln 51 in der Summe die größte Standardabweichung bzgl. der Farb- oder Grauwerte aufweist.

Besonders vorteilhaft ist es dabei, wenn für die Grauwerte-Korrelation Einzelkachelspalten verwendet werden, wenn die Codes 27 von unten nach oben oder umgekehrt durch die Bilder 35, 37 laufen. Demgegenüber ist es vorteilhaft, wenn für die Grauwerte-Korrelation Einzelkachelzeilen verwendet werden, wenn die Codes 27 von links nach rechts oder umgekehrt durch die Bilder 35, 37 laufen. Die Angabe, wie die Codes 27 durch die Bilder 35, 37 laufen, kann z.B. durch den Benutzer des Detektionssystems 21 bereitgestellt oder vom Detektionssystem 21 selbst bestimmt werden.

Nach einer abgewandelten Ausgestaltung können die Standardabweichungen von Kachelzeilen oder Kachelspalten zweier aufeinanderfolgender Bilder 35, 37 miteinander korreliert werden. Dadurch kann die Zeitdauer, die für die Bestimmung eines jeweiligen Verschiebungsvektors erforderlich ist, verkürzt werden. Zum Beispiel wird die untere Hälfte der Spalte 53 des i-ten Bildes 35 jeweils kachelweise nach oben verschoben. Nach jeder Verschiebung wird dann auf der Basis der Standabweichungen ein Korrelationskoeffizient zwischen der verschobenen Spalte 53 des i-ten Bildes 35 und der Spalte 53 des (i+1)-ten Bildes 37 berechnet. In entsprechender Weise wird die obere Hälfte der Spalte 53 des i-ten Bildes 35 jeweils kachelweise nach unten verschoben und nach jeder Verschiebung auf der Basis der Standabweichungen ein Korrelationskoeffizient zwischen der verschobenen Spalte 53 des i-ten Bildes 35 und der Spalte 53 des (i+1)-ten Bildes 37 berechnet. Dadurch kann wiederum in der entsprechenden Weise wie vorstehend bereits mit Bezug auf Fig. 5 ausgeführt wurde, ein maximaler Korrelationskoeffizient bestimmt werden, dessen zugehörige Verschiebung dem Verschiebungsvektor 39 entspricht. Die Genauigkeit der Bestimmung des Verschiebungsvektors 39 ist dabei durch die Auflösung der Kacheln 51 beschränkt, so dass der Verschiebungsvektor 39 nicht Pixel-genau berechnet werden kann. Allerdings kann - in der entsprechenden Weise wie vorstehend bereits erwähnt wurde - die Genauigkeit der Bestimmung des Verschiebungsvektors 39 dadurch erhöht werden, dass ein Parabelfit durch den maximalen Korrelationskoeffizienten und dessen Nachbarstellen ausgeführt wird.

Das vorstehend beschriebene Verfahren zur Bestimmung des jeweiligen Verschiebungsvektors zwischen aufeinanderfolgenden Bildern kann auch in den Sensor 23 integriert sein, der z.B. als FPGA (field programmable gate array) ausgestaltet ist. Dadurch kann der Sensor 23 den jeweiligen Verschiebungsvektor als Zusatzinformation für ein jeweiliges Bildpaar ausgeben und insbesondere der Auswerteeinrichtung 25 bereitstellen.

Bezugszeichenliste

21 Detektionssystem
23 Sensor
25 Auswerteeinrichtung
27 Code
29 Lesefeld
31 Objekt
33 Förderband
35 i-tes Bild
37 (i+1)-tes Bild

39   Verschiebungsvektor
41   erster Bildbereich, Wiedererkennungsbereich
43   zweiter Bildbereich, neuer Bildbereich
45   Grenze
47   Koordinatensystemursprung
49   Trackingliste
51   Einzelkachel
53   Spalte

F   Förderrichtung

**Patentansprüche**

1.  Detektionssystem für optische Codes (27), die an einem Objekt (31), das durch ein Lesefeld (29) eines Sensors (23) des Detektionssystems (21) gefördert wird, angebracht sind, wobei das Detektionssystem (21) dazu ausgebildet ist, mittels des Sensors (23) eine Sequenz von Bildern (35, 37) von einem jeweiligen Teil des Objekts (31), der sich zur jeweiligen Aufnahmezeit eines jeweiligen Bildes (35, 37) im Lesefeld (29) befindet, aufzunehmen,
    **dadurch gekennzeichnet, dass** das Detektionssystem (21) ferner dazu ausgebildet ist, einen jeweiligen Verschiebungsvektor (39) zwischen jeweils zwei aufeinanderfolgenden Bildern (35, 37) der Bildsequenz anhand der jeweiligen zwei aufeinanderfolgenden Bilder (35, 37) zu bestimmen, wobei der jeweilige Verschiebungsvektor (39) angibt, wie weit ein in einem Bild (37) enthaltener Bildbereich (41), der auch im Vorgängerbild (35) enthalten ist, relativ zum Vorgängerbild (35) verschoben ist.

2.  Detektionssystem nach Anspruch 1,
    **dadurch gekennzeichnet, dass** das Detektionssystem (21) dazu ausgebildet ist, für wenigstens einen und bevorzugt für alle in der Bildsequenz detektierten Codes (27) anhand der Verschiebungsvektoren (39) eine jeweilige fiktive Position wenigstens bezüglich des letzten Bilds der Bildsequenz (35, 37) zu bestimmen.

3.  Detektionssystem nach Anspruch 2,
    **dadurch gekennzeichnet, dass** das Detektionssystem (21) dazu ausgebildet ist, die detektierten Codes (27) in Abhängigkeit von ihrer jeweiligen fiktiven Position bezüglich des letzten Bildes der Bildsequenz (35, 37) zu sortieren.

4.  Detektionssystem nach einem der vorhergehenden Ansprüche,
    **dadurch gekennzeichnet, dass** das Detektionssystem (21) dazu ausgebildet ist, für einen in einem Bild (35, 37) enthaltenen Code (27) wenigstens die Position des Codes (27) in dem Bild (35, 37) zu detektieren.

5.  Detektionssystem nach einem der vorhergehenden Ansprüche,
    **dadurch gekennzeichnet, dass** das Detektionssystem (21) dazu ausgebildet ist, einen in einem Bild (35, 37) detektierten Code (27) zu dekodieren.

6.  Detektionssystem nach Anspruch 4 oder 5,
    **dadurch gekennzeichnet, dass** das Detektionssystem (21) dazu ausgebildet ist, den detektierten Code (27), insbesondere durch Dekodieren gewonnene Daten des Codes (27), und/oder die Position des Codes (27), zu speichern.

7.  Detektionssystem nach einem der Ansprüche 4 bis 6,
    **dadurch gekennzeichnet, dass** das Detektionssystem (21) dazu ausgebildet ist, anhand der Position des Codes (27) in dem Bild und anhand des zwischen dem Bild (35) und seinem Nachfolgebild (37) bestimmten Verschiebungsvektors (27) eine fiktive Position des Codes (27) bezüglich des Nachfolgebildes (37) zu bestimmen.

8.  Detektionssystem nach Anspruch 7,
    **dadurch gekennzeichnet, dass** das Detektionssystem (21) dazu ausgebildet ist, die Position durch die fiktive Position zu aktualisieren.

9.  Detektionssystem nach Anspruch 7 oder 8,
    **dadurch gekennzeichnet, dass** das Detektionssystem (21) dazu ausgebildet ist,
    anhand der fiktiven Position und des zwischen dem Nachfolgebild (35) und dem diesem nachfolgenden, zweiten Nachfolgebild (37) bestimmten Verschiebungsvektors (39) eine weitere fiktive Position des Codes (27) bezüglich des zweiten Nachfolgebilds (37) zu bestimmen,

in entsprechender Weise für jedes weitere Nachfolgebild eine jeweilige weitere fiktive Position des Codes (27) in dem jeweiligen Nachfolgebild zu bestimmen, bis für das letzte Bild der Sequenz von Bildern die fiktive Position des Codes bezüglich des letzten Bildes bestimmt ist,

und, bevorzugt, wenigstens die fiktive Position des Codes bezüglich des letzten Bildes zu speichern.

10. Detektionssystem nach Anspruch 9,
   **dadurch gekennzeichnet, dass** das Detektionssystem (21) dazu ausgebildet ist, einen Code (27), der an einer im jeweiligen Nachfolgebild (37) berechneten fiktiven Position detektiert wird, zu dekodieren oder, insbesondere falls der Code bereits erfolgreich dekodiert wurde, insbesondere im vorhergehenden Bild (35), nicht mehr zu dekodieren.

11. Detektionssystem nach einem der vorhergehenden Ansprüche,
   **dadurch gekennzeichnet, dass** das Detektionssystem (21) dazu ausgebildet ist, anhand wenigstens eines Verschiebungsvektors (39) Paare von Codes zu identifizieren, wobei ein jeweiliges Code-Paar aus einem ersten Code und dem gleichen, in einem späteren Bild detektierten zweiten Code gebildet ist.

12. Detektionssystem nach einem der vorhergehenden Ansprüche,
   **dadurch gekennzeichnet, dass** das Detektionssystem (21) dazu ausgebildet ist,
   die Position eines zweiten Codes in einem späteren Bild mit der für das spätere Bild berechneten fiktiven Position eines ersten Codes zu vergleichen, und
   den ersten Code und den zweiten Code als ein Code-Paar zu identifizieren, wenn die Position und die fiktive Position zumindest im Wesentlichen übereinstimmen.

13. Detektionssystem nach Anspruch 11 oder 12,
   **dadurch gekennzeichnet, dass** das Detektionssystem (21) dazu ausgebildet ist, mittels Dekodieren gewonnene Daten des ersten Codes durch mittels Dekodieren gewonnene Daten des zweiten Codes zu aktualisieren und/oder zu ergänzen und/oder zu verifizieren.

14. Detektionssystem nach einem der vorhergehenden Ansprüche,
   **dadurch gekennzeichnet, dass** das Detektionssystem (21) dazu ausgebildet ist, anhand wenigstens eines Verschiebungsvektors (37) eine Fördergeschwindigkeit zu bestimmen, mit der das Objekt (31) durch das Lesefeld (29) gefördert wird.

15. Detektionssystem nach einem der vorhergehenden Ansprüche,
   **dadurch gekennzeichnet, dass** das Detektionssystem (21) dazu ausgebildet ist, einen jeweiligen Verschiebungsvektor (39) zwischen einem Bild (35) und seinem Nachfolgebild (37) unter Verwendung eines korrelativen Verfahrens, bei dem wenigstens ein aus dem Bild (35) gewonnenes Profil und ein aus dem Nachfolgebild (37) gewonnenes Profil miteinander korreliert werden, zu berechnen.

Fig. 1

Fig. 2

| Code | Position |
|------|----------|
| Code 1 | Koordinaten X1/Y1 |
| Code 2 | Koordinaten X2/Y2 |

49

27

Fig. 3

| Nummer | Name der Klasse | |
|---|---|---|
| 1 | Good Read | Codetyp, Codeinhalt (String) und Länge bekannt |
| 2 | Multi-Read-Fail | Codetyp, Codeinhalt (String) und Länge bekannt |
| 3 | Norca | Mögl. Codetyp bekannt, Inhalt und Länge evtl. bekannt |
| 4 | No-Read | Keine Informationen über Codetyp und Inhalt vorhanden |

Fig. 4

51
27
53
37

51
39
27
53
35

Fig. 5

Europäisches
Patentamt

European
Patent Office

Office européen
des brevets

# EUROPÄISCHER RECHERCHENBERICHT

**Nummer der Anmeldung**

EP 14 18 8805

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | NOHYOUNG PARK ET AL: "Barcode-Assisted Planar Object Tracking Method for Mobile Augmented Reality", 2011 INTERNATIONAL SYMPOSIUM ON UBIQUITOUS VIRTUAL REALITY, 1. Juli 2011 (2011-07-01), Seiten 40-43, XP055178099, DOI: 10.1109/ISUVR.2011.20 ISBN: 978-1-45-770356-0 | 1,2, 4-10,15 | INV. G06T7/00 G06T7/20 |
| Y | * Zusammenfassung; Abbildung 1 * <br> * section II.A * <br> * section II.C * <br> * section II.D * <br> ----- | 3,11-14 | |
| Y | CONSTANTIN TIMM ET AL: "Decentralized Control of a Material Flow System Enabled by an Embedded Computer Vision System", COMMUNICATIONS WORKSHOPS (ICC), 2011 IEEE INTERNATIONAL CONFERENCE ON, IEEE, 5. Juni 2011 (2011-06-05), Seiten 1-5, XP031909283, DOI: 10.1109/ICCW.2011.5963564 ISBN: 978-1-61284-954-6 * section IV.D; Abbildung 5 * <br> ----- | 3,11-14 | |

**RECHERCHIERTE SACHGEBIETE (IPC)**

G06T

Der vorliegende Recherchenbericht wurde für alle Patentansprüche erstellt

| Recherchenort | Abschlußdatum der Recherche | Prüfer |
|---|---|---|
| München | 28. April 2015 | Kollreider, Klaus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10051415 C2